# EUROPEAN PATENT APPLICATION

(11) **EP 4 647 553 A2**
(43) Date of publication of application: **12.11.2025**
(21) Application number: 25205118.0
(22) Date of filing: 26.04.2024
(51) Int. Cl.: E01H 1/05

(54) **APPARATUS AND SYSTEM FOR GROOMING TURF SURFACES**

(30) Priority: 26.04.2023 US 202363462046 P
(62) Divisional of application: 24172829.4
(71) Applicant: Forward Innovation Inc., Listowel, Ontario N4W 3G9 (CA)
(72) Inventor: Van Veen, Ryan, Cambridge, N1S 4B5 (CA); Rothwell, Benjamin, Listowel, N4W 3G9 (CA); Tollenaar, Evan Adrian, Monkton, N0K 1P0 (CA)
(74) Representative: Barker Brettell LLP

(57) **Abstract**

An apparatus for grooming grass on a turf surface is described. The apparatus comprises at least one guide wheel for driving the apparatus on the turf surface. The apparatus further comprises at least one brush operationally coupled to the at least one guide wheel and configured to contact and groom the grass when the apparatus is driven on the turf surface. The apparatus further comprises a pivot mechanism configured to pivot the at least one brush about an axle of the at least one guide wheel to compensate for change in contour of the turf surface.

## Description

### Field of the Invention

The present invention relates generally to turf maintenance, and more particularly, to apparatus and system for grooming turf surface.

### Background of the Invention

Grass grooming is an essential aspect of maintaining various turf surfaces, such as lawns, golf courses, and athletic fields. Effective grass grooming practices not only enhance the aesthetic appeal of the turf but also contribute to its health and longevity. Traditional methods of grass grooming often involve manual labor or the use of specialized equipment.

However, existing grass grooming apparatuses may have limitations in effectively addressing the diverse needs of different turf surfaces. Challenges such as uneven terrain, varying grass conditions, and the need for precise grooming techniques can pose obstacles to achieving optimal results.

To address these challenges, there is a need for apparatus and system for efficiently grooming grass on turf surfaces while overcoming the limitations of existing approaches.

### Summary of the Invention

The present invention is directed to an apparatus for grooming grass on a turf surface. The apparatus comprises at least one guide wheel for driving the apparatus on the turf surface. The apparatus further comprises at least one brush operationally coupled to the at least one guide wheel and configured to contact and groom the grass when the apparatus is driven on the turf surface. The apparatus further comprises a pivot mechanism configured to pivot the at least one brush about an axle of the at least one guide wheel to compensate for change in contour of the turf surface.

The present invention is further directed to an apparatus for grooming grass on a turf surface. The apparatus comprises at least one guide wheel for driving the apparatus on the turf surface. The apparatus further comprises at least one floating brush operationally coupled to the guide wheel and configured to contact and groom the grass when the apparatus is driven on the turf surface. The apparatus further comprises a biasing mechanism configured to bias the at least one floating brush with a biasing force for selectively adjusting a relative distance of the at least one floating brush with the turf surface, thereby adjusting the pressure applied on the grass by the at least one floating brush.

Both the embodiments of the apparatus mentioned above may additionally include any of the following features in any combinations.

In some embodiments, the pivot mechanism is configured to pivot the at least one brush in response to change in contour of the turf surface while the apparatus is being driven thereupon.

In some embodiments, said pivoting of the at least one brush ensures that the at least one brush remains in contact with the grass during said change in contour of the turf surface.

In some embodiments, the pivot mechanism provides the at least one brush with a fore aft degree of freedom.

In some embodiments, the biasing mechanism comprises a spring.

In some embodiments, the biasing force is a downforce acting at least partially in a vertical direction that causes the at least one brush to operate as a floating brush.

In some embodiments, the at least one brush comprises at least one drag brush configured to orient the grass all in a single direction.

In some embodiments, the at least one brush comprises at least one rotary brush configured to orient the grass in a vertical direction.

In some embodiments, the apparatus further comprises a chain mechanism configured to rotate the rotary brush in conjunction with the at least one guide wheel.

In some embodiments, the chain mechanism is configured to rotate the rotary brush selectively in a direction opposite to the direction of rotation of the at least one guide wheel and selectively in a direction same as the direction of rotation of the at least one guide wheel.

In some embodiments, the chain mechanism is configured to facilitate changing a direction of rotation of the rotary brush with respect to a direction of rotation of the at least one guide wheel.

In some embodiments, the chain mechanism remains in a constant tension during the pivoting of the at least one brush about the axle of the at least one guide wheel.

The present invention is further directed to a system operable for grooming grass on a turf surface. The system, at least during operation thereof, comprises a central frame and a plurality of turf grooming apparatus each coupled to the central frame. The plurality of turf grooming apparatus comprises a central turf grooming apparatus, at least one right side outboard turf grooming apparatus, and at least one left side outboard turf grooming apparatus. The central turf grooming apparatus is configured to rotate together with the central frame at least during operation of the system for grooming grass on the turf surface.

In some embodiments, the apparatus of the system may include an apparatus as per any examples/embodiments of the apparatus described above.

In some embodiments, at least one of the plurality of turf grooming apparatus comprises at least one guide wheel for driving the apparatus on the turf surface; at least one brush operationally coupled to the at least one guide wheel and configured to contact and groom the grass when the apparatus is driven on the turf surface; and a pivot mechanism configured to pivot the at least one brush about an axle of the at least one guide wheel to compensate for change in contour of the turf surface.

In some embodiments, said at least one of the plurality of turf grooming apparatus comprises a chain mechanism configured to rotate the at least one brush in conjunction with the at least one guide wheel.

In some embodiments, the chain mechanism is configured to rotate the at least one brush selectively in a direction opposite to the direction of rotation of the at least one guide wheel and selectively in a direction same as the direction of rotation of the at least one guide wheel.

In some embodiments, the chain mechanism is configured to facilitate changing a direction of rotation of the at least one brush with respect to a direction of rotation of the at least one guide wheel.

In some embodiments, the chain mechanism remains in constant tension during the pivoting of the at least one brush about the axle of the at least one guide wheel.

In some embodiments, the pivot mechanism is configured to pivot the at least one brush in response to change in contour of the turf surface while the apparatus is being driven thereupon.

In some embodiments, said pivoting of the at least one brush ensures that the at least one brush remains in contact with the grass during said change in contour of the turf surface.

In some embodiments, the pivot mechanism provides the at least one brush with a fore aft degree of freedom.

In some embodiments, the at least one of the plurality of turf grooming apparatus comprises a biasing mechanism configured to bias the at least one brush with a biasing force for selectively adjusting a relative distance of the at least one brush with the turf surface, thereby adjusting the pressure applied on the grass by the at least one brush.

In some embodiments, the biasing mechanism comprises a spring.

In some embodiments, the biasing force is a downforce acting at least partially in a vertical direction that causes the at least one brush to operate as a floating brush.

In some embodiments, the at least one brush comprises at least one drag brush configured to orient the grass all in a single direction.

In some embodiments, the at least one brush comprises at least one rotary brush configured to orient the grass in a vertical direction.

In some embodiments, the at least one guide wheel is positioned inboard of the at least one brush.

In some embodiments, the system further comprises a hitch mechanism for connecting the system to a towing vehicle, said central frame being pivotally coupled to the hitch mechanism.

In some embodiments, the central turf grooming apparatus is configured to freely rotate side to side and/or pivot up and down via multiple pivot axes in the hitch mechanism.

In some embodiments, at least one of the right side and left side outboard turf grooming apparatus partially overlaps the central turf grooming apparatus when viewed in a direction extending from the central frame towards the central turf grooming apparatus.

In some embodiments, each one of the right side and left side outboard turf grooming apparatus is pivotally coupled to the central frame by means of a respective connection arm.

In some embodiments, each connection arm has at least two pivot points allowing the corresponding right and left side outboard turf grooming apparatus to independently pivot as well as independently translate vertically.

In some embodiments, each of the right side and left side outboard turf grooming apparatus are configured to pivot independently of the central turf grooming apparatus.

In some embodiments, the system further comprises an actuator operatively coupled to at least one of the right and left side outboard turf grooming apparatus and configured to fold the at least one outboard turf grooming apparatus with respect to the central frame between a storage state in which the at least one outboard turf grooming apparatus is positioned within a width of the central turf grooming apparatus and a deployed state in which the at least one outboard turf grooming apparatus extends at least partially beyond the width of the central turf grooming apparatus. In some embodiments, the actuator is configured to fold the at least one outboard turf grooming apparatus with respect to the central frame into a rigid state.

In some embodiments, the at least one outboard turf grooming apparatus comprises an inboard wheel and an outboard wheel, said outboard wheel being positioned further from the central frame than the inboard wheel during the deployed state, wherein during folding of the at least one outboard turf grooming apparatus from the deployed state to the storage state, the inboard wheel rises off the turf surface prior to the outboard wheel.

In some embodiments, the at least one outboard turf grooming apparatus comprises an inboard wheel and an outboard wheel, said outboard wheel being positioned further from the central frame than the inboard wheel during the deployed state, wherein during folding of the at least one outboard turf grooming apparatus from the storage state to the deployed state, the outboard wheel contacts the turf surface prior to the inboard wheel.

These and other objects, features, and advantages of the present invention will become more readily apparent from the attached drawings and the detailed description of the preferred embodiments, which follow.

### Brief Description of the Drawings

The preferred embodiments of the invention will hereinafter be described in conjunction with the appended drawings provided to illustrate and not to limit the invention, where like designations denote like elements, and in which:
FIG. 1 illustrates a side view of a turf grooming apparatus for grooming grass on a turf surface, the apparatus operating in a top-dress mode.
FIG. 2 illustrates a side view of a turf grooming apparatus, the apparatus operating in a pre-cut mode.
FIG. 3A illustrates a side view of the apparatus of FIG. 1 being driven on the turf surface being a valley.
FIG. 3B illustrates a side view of the apparatus of FIG. 1 being driven on the turf surface being a hill.
FIG. 3C illustrates a side view of the apparatus of FIG. 1 being towed by a towing vehicle.
FIGS. 3D-3E illustrates side views of the apparatus being driven on the turf surface with a change in contouring.
FIG. 4A illustrates a perspective view of a system operable for grooming grass on the turf surface.
FIG. 4B illustrates a front view of the system being towed by a towing vehicle.
FIG. 4C illustrates a top view of the system configured to be coupled to the towing vehicle via a hitch mechanism.
FIG. 4D illustrates a front view of the system depicting the right side outboard apparatus and the central frame.
FIGS. 5A-5G illustrate various configurations of the system in response to change in contour of the turf surface.
FIG. 6 illustrates an embodiment of a chain frame of a central apparatus of the system.

Like reference numerals refer to like parts throughout the several views of the drawings.

### Detailed Description

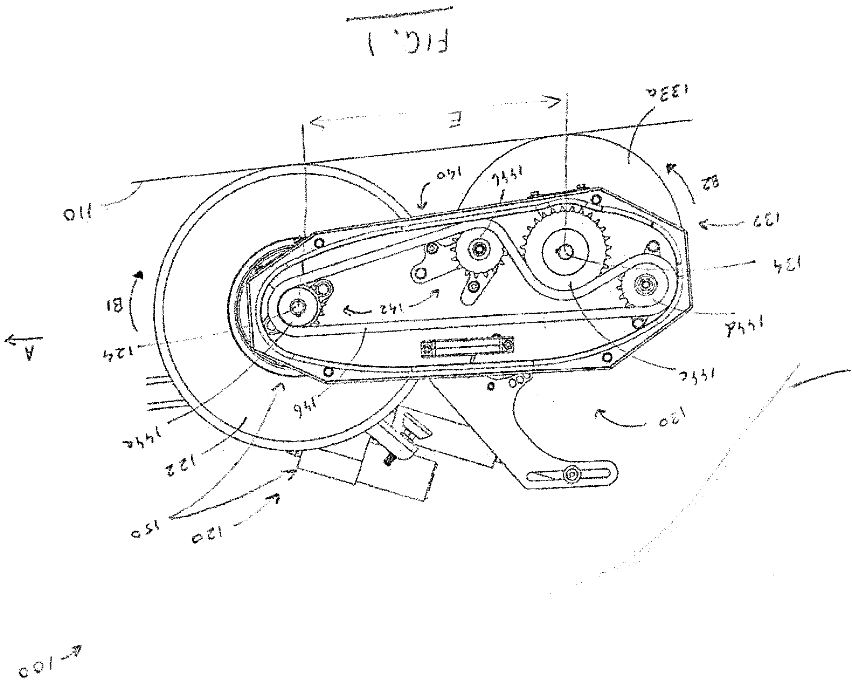

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. The term "comprising" can also encompass the terms "consisting essentially of" and "consisting of." For purposes of description herein, the terms "top", "bottom", "upper", "lower", "left", "rear", "right", "front", "vertical", "horizontal", "side", "rear", and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

In the following description, certain specific details are set forth in order to provide a thorough understanding of various disclosed embodiments. However, one skilled in the relevant art will recognize that embodiments may be practiced without one or more of these specific details, or with other methods, components, materials, and the like. In other instances, well-known elements associated with turf rollers have not been shown or described in detail to avoid unnecessarily obscuring descriptions of the embodiments.

Unless the context requires otherwise, throughout the specification and claims which follow, the word "comprise" and variations thereof, such as, "comprises" and "comprising" are to be construed in an open, inclusive sense, that is, as "including, but not limited to."

As used in this specification and the appended claims, the singular forms "a," "an," and "the" include plural referents unless the content clearly dictates otherwise, and the vice versa. It should also be noted that the term "or" is generally employed in its broadest sense, that is, as meaning "and/or" unless the content clearly dictates otherwise.

The headings and Abstract of the Disclosure provided herein are for convenience only and do not interpret the scope or meaning of the embodiments.

Referring initially to FIG. 1, an apparatus 100 for grooming grass on a turf surface 110 is described. FIG. 1 illustrates a side view of the turf grooming apparatus 100. The apparatus 100 may be configured to be towed over the turf surface 110. The turf surface 110 may include a covering of grass. The turf surface 110 refers to any surface that has a covering of grass. In a non-limiting example, the turf surface 110 may be a surface of a golf course, or any other lawn. The apparatus 100 may be towed over the turf surface 110 when grooming of the grass is required. The grooming may include, in non-limiting examples, orienting grass blades in a particular direction, dethatching grass, reducing worm cast, removing dew, brushing in top-dressing materials, and/or performing preventative measures for controlling turf disease.

The apparatus 100 may include a wheel frame 120 comprising at least one guide wheel 122. The at least one guide wheel 122 may be configured for driving the apparatus 100 on the turf surface 110. The wheel frame 120 may include an axle 124 and the at least one guide wheel 122 may be mounted on the axle 124 such that the at least one guide wheel 122 freely rotates about the axle 124. The at least one guide wheel 122 may rotate about the axle 124 when the apparatus 100 is driven on the turf surface 110, such as, when the apparatus 100 is towed by a towing vehicle.

The apparatus 100 may include a brush frame 130 coupled to the wheel frame 120. The brush frame 130 may comprise at least one brush 132 mounted thereto. The at least one brush 132 may be configured to groom the grass when the at least one brush 132 is in contact with the grass and the apparatus 100 is driven on the turf surface 110. The brush frame 130 may facilitate rotation of the at least one brush 132. For instance, the brush frame 130 may include a brush axle 134 coupled to the at least one brush 132 about which the at least one brush freely rotates.

In an embodiment, the at least one guide wheel 122 may include a first guide wheel and a second guide wheel, though one of the first guide wheel and the second guide wheel is visible in FIG. 1. In an embodiment, the first guide wheel may be positioned inboard of the at least one brush 132, may be referred to as an inboard guide wheel, and the second guide wheel may be positioned outboard of the at least one brush 132, and may be referred to as an outboard guide wheel. In some examples, both the guide wheels can be positioned inboard the of the at least one brush 132. For instance, the total width occupied by the guide wheels can be within the lateral extent of the total width occupied by all the brushes.

In an embodiment, the at least one brush 132 may be a rotary brush 133a configured to orient the grass in a vertical direction when the apparatus 100 is driven on the turf surface 110.

The apparatus 100 may further include a chain frame 140 adapted to couple the wheel frame 120 with the brush frame 130. The chain frame 140 may include a chain mechanism 142 configured to rotate the at least one brush 132 (the rotary brush in the illustrated embodiment) in conjunction with the at least one guide wheel 122. In an embodiment, the chain mechanism 142 may include a set of sprockets 144a-144d and a chain 146. In another embodiment, the chain mechanism 142 may include a set of pulleys and a belt. With the chain mechanism 142, the at least one guide wheel 122 provide a constant brush speed relative to the ground speed.

The chain 146 may be mechanically coupled to each sprocket of the set of sprockets 144a-144d. In an embodiment, the chain 146 may be formed of a plurality of interconnected links while each of the set of sprockets 144a-144d may have a plurality of teeth arranged on a circumference thereof. The plurality of teeth may be configured to engage with the interconnected links of the chain 146 such that transfer of rotational motion among the set of sprockets 144a-144d is enabled.

As mentioned above, the chain mechanism 142 may be configured to rotate the at least one brush 132 (here, the rotary brush 133a) in conjunction with the at least one guide wheel 122. The sprocket 144a may be connected to the axle 124 of the at least one guide wheel 122 while the sprocket 144c may be connected to the axle 134 of the rotary brush 133a. By virtue of the chain mechanism 142, the rotation of the at least one guide wheel 122 and the sprocket 144a is transferred to the sprocket 144c, causing rotation of the sprocket 144c. The rotation of the sprocket 144c further causes rotation of the brush axle 134 and the rotary brush 133a. Accordingly, the at least one guide wheel 122 rotates in conjunction with the rotary brush 133a.

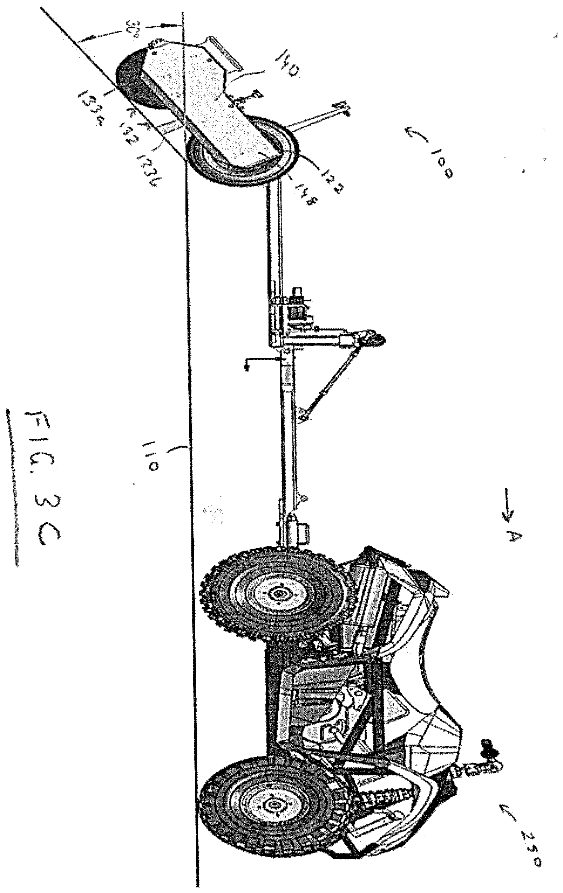

In an embodiment, the chain frame 140 may further include a plate 148 (not shown in FIG. 1, visible in FIGS. 3C-3D) configured to enclose the chain mechanism 142 and prevent exposure of the chain mechanism 142 to dust and debris.

In an embodiment, the chain mechanism 142 remains in a constant tension at all times during operation of the apparatus 100. As will be detailed below, the chain mechanism 142 remains in a constant tension during a pivoting motion of the at least one brush 132.

In an embodiment, the apparatus 100 may operate in one of a top dress mode or a pre-cut mode. In the top-dress mode, the chain mechanism 142 may be configured to rotate the rotary brush 133a selectively in a direction opposite to the direction of rotation of the at least one guide wheel 122. The top-dress mode is depicted in FIG. 1 where arrow A depicts a direction of travel of the apparatus 100. In the travel direction A, the at least one guide wheel 122 rotates in a clock-wise manner, as depicted by arrow B1. In the chain mechanism 142, the chain 146 wraps around the sprocket 144b at a lower portion thereof and around the sprocket 144c at an upper portion thereof. By virtue of the arrangement of the chain mechanism 142 illustrated in FIG. 1, the rotation of the at least one guide wheel 122 is transferred to the rotary brush 133a such that the rotary brush 133a rotates in an anti-clockwise manner as depicted by arrow B2. The top-dress mode is mainly used for more aggressive brushing situations such as working in top dressing (sand) into aeration holes or breaking up worm castings and aerification cores.

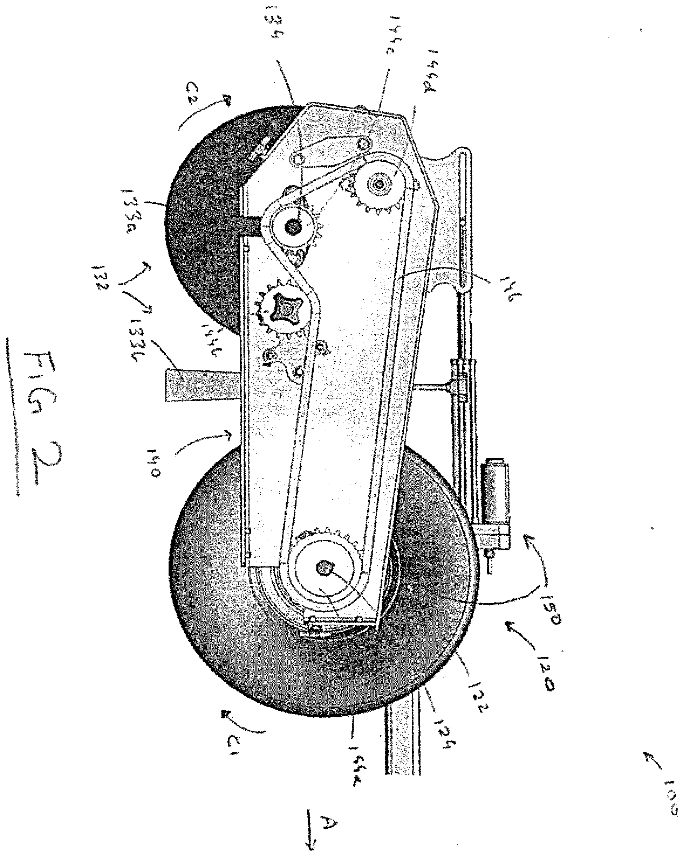

In the pre-cut mode, the chain mechanism 142 may be configured to rotate the rotary brush 133a selectively in a direction same as the direction of rotation of the at least one guide wheel 122. The pre-cut mode is depicted in FIG. 2 that illustrates another side view of the apparatus 100. The details described above with reference to FIG. 1 are also applicable for FIG. 2. As seen in FIG. 2, in the chain mechanism 142, the chain 146 wraps around the sprocket 144b at an upper portion thereof and around the sprocket 144c at a lower portion thereof. Arrow A depicts a direction of travel of the apparatus 100. In the travel direction A, the at least one guide wheel 122 rotates in a clock-wise manner, as depicted by arrow C1. By virtue of the arrangement of the chain mechanism 142 illustrated in FIG. 2, the rotation of the at least one guide wheel 122 is transferred to the rotary brush 133a such that the rotary brush 133a also rotates in a clockwise manner as depicted by arrow C2.

Accordingly, the apparatus 100 may operate in any of the top-dress mode and the pre-cut mode. In order to switch the apparatus from the top-dress mode to the pre-cut mode and vice versa, the arrangement of the chain mechanism 142 may be adjusted. In an embodiment, an operator may manually adjust the chain mechanism 142, in particular, the coupling of the chain 146 with the sprockets 144b and 144c. In an embodiment, the rotational direction of the rotary brush 133a may be reversed by altering a location of an idler sprocket, i.e., sprocket 144d, and altering the chain path without changing the length of the chain 146. The chain mechanism 142 may thus be configured to facilitate changing a direction of rotation of the rotary brush 133a with respect to a direction of rotation of the at least one guide wheel 122. In some embodiment, the apparatus may include a controller for automatically adjusting the chain mechanism 142, in particular, the coupling of the chain 146 with the sprockets 144b and 144c to reverse the direction of rotation of the brush with respect to the guide wheel, for example, based on instructions.

As described above, the at least one guide wheel 122 may include an inboard guide wheel and/or an outboard guide wheel. In an embodiment, the chain mechanism 142 may be operationally coupled to one of the inboard wheel or the outboard wheel.

The turf surface 110 may include straight surfaces and uneven surfaces. That is, there may be a change in contour of the turf surface when travelling from one location to another location on the turf surface 110. The uneven surfaces may include, for instance, hills and valleys on the turf surface 110. The apparatus 100 may further include a pivot mechanism 150 to compensate for change in the contour of the turf surface 110 when the apparatus 100 is driven on the turf surface 110. The pivot mechanism 150 may be configured to pivot the brush frame 130 that is positioned behind the wheel frame 120, and consequently the at least one brush 132 (here, the rotary brush 133a), about the axle 124 of the at least one guide wheel 122. The at least one brush 132 may pivot in response to the change in contour of the turf surface 110 when the apparatus 100 is being driven thereupon. It is to be understood herein that the pivot mechanism 150 can have any structure suitable to effect pivoting of the brush 133a about the axle 124, for example, a telescopic mechanism, a cam arrangement, mechanical arms cooperating with each other, etc.

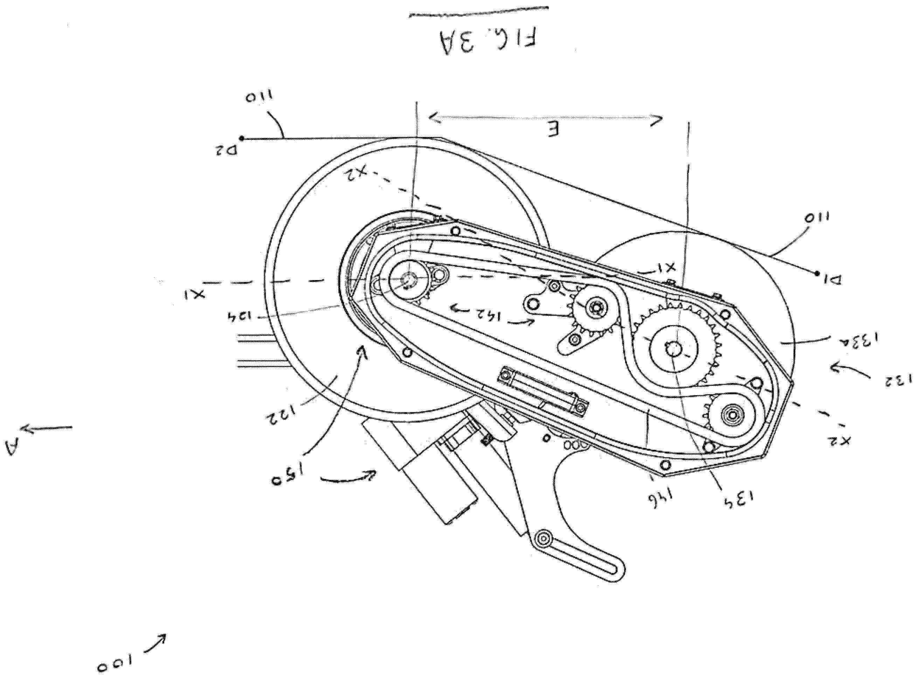

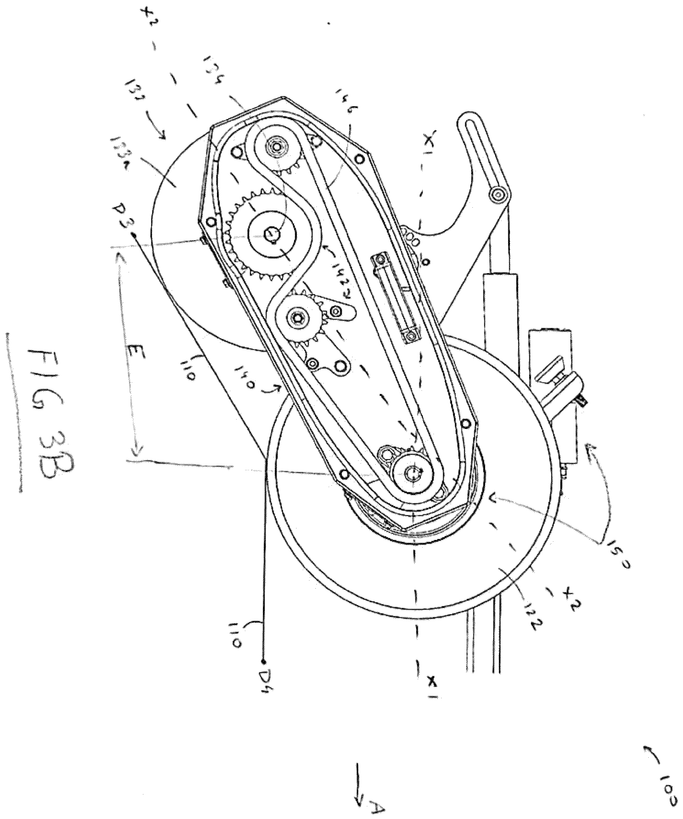

Referring to FIGS. 3A-3C, a side view of the apparatus 100 being driven on the turf surface 110 with a change in contouring is depicted. In FIG. 3A, the apparatus 100 is being driven on the turf surface being a valley while in FIG. 3B, the apparatus 100 is being driven on the turf surface being a hill. FIG. 3C depicts the apparatus 100 of FIG. 3B being towed by a towing vehicle. By virtue of the pivot mechanism 150, the at least one brush 132 remains in contact with the grass on the turf surface 110 during the change in the contour of the turf surface (valley in FIG. 3A and hill in FIG. 3B).

The at least one brush 132 may thus move over the turf surface and remain in contact with the grass irrespective of the change in contouring on the turf surface 110. In FIG. 3A, the at least one brush 132 may remain in contact with the grass when travelling from point D1 to point D2 in direction A on the turf surface in spite of the change in contouring between points D1 and D2. The at least one guide wheel 122 may travel in the plane X1 while the at least one brush 132 pivots with about the axle 124 and travels in the plane X2.

Similarly, in FIG. 3B, the at least one brush 132 may remain in contact with the grass when travelling from point D3 to point D4 on the turf surface in spite of the change in contouring between points D3 and D4. The at least one guide wheel 122 may travel in the plane X1 while the at least one brush 132 pivots with about the axle 124 and travels in the plane X2. The at least one guide wheel 122 may be towed by a pulling force applied by the towing vehicle 250, which is coupled to the apparatus 100 by means of a hitch mechanism. Details regarding the hitch mechanism will be described in detail further below.

In both scenarios, during the movement over the change in contouring on the turf surface 110, the at least one guide wheel 122 travels on the turf surface 110 (i.e., contacts the turf surface 110) while the at least one brush 132 also remains in contact with the grass on the turf surface 110 due to the pivot mechanism 150. In absence of the pivot mechanism 150, the at least one brush 132 would lose contact with the grass in case of change in contouring on the turf surface 110.

As is evident from FIGS. 3A-3B, a fore aft degree of freedom may be provided to the at least one brush 132 due to the pivot mechanism 150 as described above. With the fore aft degree of freedom, the at least one brush 132 can pivot about the axle of the at least one guide wheel 122 and effectively contour in the fore aft direction to remain in contact with the grass on the turf surface 110. A better contouring ability is thus provided to the apparatus 100.

In an embodiment, the chain mechanism 142 remains in constant tension for any fore or aft pivoting. That is, the chain mechanism 142 remains in constant tension during pivoting of the at least one brush 132 about the axle 124 of the at least one guide wheel 122. This is because a constant radius E (shown in FIG. 1 and FIGS. 3A-3B) is maintained between respective centers of the at least one guide wheel 122 and the at least one brush 132 during pivoting of the at least one brush 132. Such a configuration of the chain mechanism 142 eliminates the need for a dynamic tensioner since the distance E between the respective centers of the at least one guide wheel 122 and the at least one brush 132 remains constant for all possible positions of brush 132 in response to change in contouring of the turf surface, i.e., during the pivoting of the brush 132.

In an embodiment, the apparatus 100 may further include a biasing mechanism configured to bias the at least one brush 132 with a biasing force for selectively adjusting a relative distance of the at least one brush 132 with the turf surface 110. In an embodiment, the biasing force (downforce for ground pressure) may be adjustable. As a result, the pressure applied on the grass by the at least one brush 132 can be adjusted. In an embodiment, the biasing mechanism is a spring. In an embodiment, the biasing mechanism comprises weights. In an embodiment, the biasing force is a down-force acting at least partially in a vertical direction that causes the at least one brush 132 to operate as a floating brush. By virtue of the floating brush, any possibility of damage to the turf surface 110 is eliminated. An operator can adjust the biasing force to adjust the distance of the at least one brush 132 with the turf surface 110, preventing the at least one brush 132 from pushing in too deep into the grass and contacting the turf surface 110. The at least one brush 132 may thus float behind the at least one guide wheel 122 with as much or as little biasing force (down force) as the operator deems fit.

In an embodiment, the at least one brush 132 may include at least one drag brush. In an embodiment, the at least one brush 132 may include at least one rotary brush and at least one drag brush. In the embodiment of the apparatus 100 illustrated in FIG. 2, a rotary brush 133a and a drag brush 133b are depicted. The drag brush 133b may be positioned between the at least one guide wheel 122 and the rotary brush 133a. The drag brush 133b may be configured to orient the grass all in a single direction by sweeping the grass in the driving direction A. In an embodiment, the drag brush 133b may be removable. The drag brush 133b in conjunction with the rotary brush 133a allows for two directions of brushing in a single driving direction with the reversal of the rotation of the rotary brush 133a.

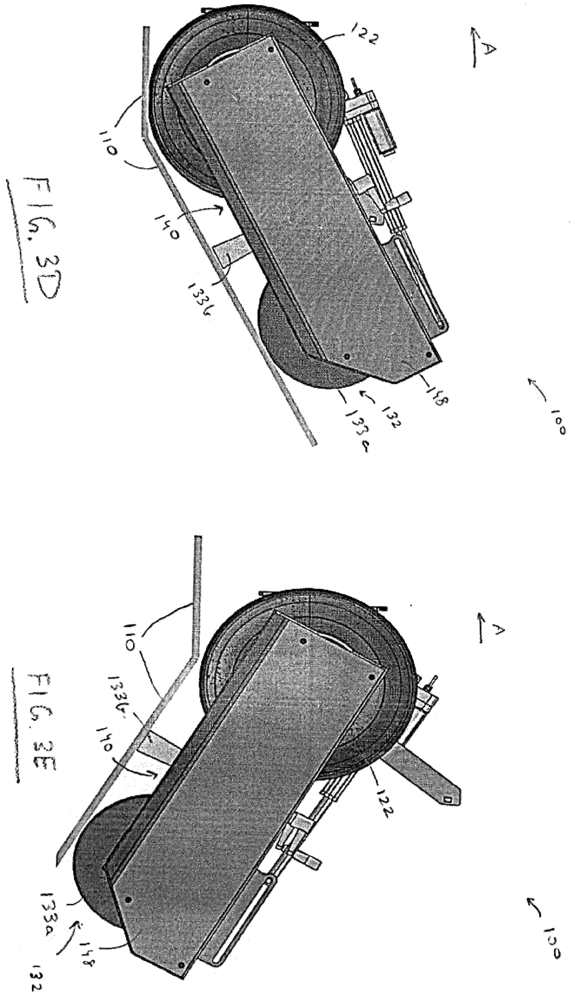

Referring to FIGS. 3D-3E, a side view of the apparatus 100 of FIG. 2 being driven on the turf surface 110 with a change in contouring is depicted. In FIG. 3D, the apparatus 100 is being driven in direction A on the turf surface being a valley while in FIG. 3E, the apparatus 100 is being driven in direction A on the turf surface being a hill. The apparatus 100 includes the rotary brush 133a and the drag brush 133b. As described with reference to FIGS. 3A-3B, the rotary brush 133a remains in contact with the grass on the turf surface 110 during the change in the contour of the turf surface by means of the pivot mechanism 150.

Further, a distance of the drag brush 133b with respect to the turf surface 110 may also be adjusted so that the drag brush 133b remains in contact with the grass when the apparatus 100 is driven over the turf surface having a change in contour (hills and/or valleys). In FIG. 3D, the drag brush 133b remains in contact with the grass on the turf surface 110 in spite of the change in contouring. Similarly, in FIG. 3E, the drag brush 133b remains in contact with the grass on the turf surface 110 in spite of the change in contouring. In an embodiment, an aggressiveness of the rotary brush 133a and the drag brush 133b contacting the grass may be altered with a weighted plate mounted to the brush frame 130.

Accordingly, a turf grooming apparatus 100 is described with floating rotary brush, and optionally drag brush, to contour uneven surfaces with the multipurpose functionality of correcting grass blade orientation to optimize pre-cut preparation practices, dethatching grass, reducing worm cast, removing dew, brushing in top-dressing materials and/or performing preventative measures for controlling turf disease. The apparatus 100 features a rotational fore-aft degree of freedom in the rotary brush and/or the drag brush to provide better contouring ability by means of a pivot mechanism. The pivoting may occur at the axle of the guide wheel, allowing for a chain configuration that remains in constant tension for any fore/aft rotation. The rotary brush and/or the drag brush may be floating brushes that can be adjusted with a spring force down pressure from a biasing mechanism, as opposed to adjusting the relative distance to the ground surface with guide wheels.

Moreover, the apparatus may operate in top-dress mode or pre-cut mode. In the pre-cut mode, the drag brush can sweeps the grass in the direction of travel, while the rotary brush rotates the same way as the guide wheel in the direction of travel to place grass fibers upright. As described above, the aggressiveness of the brushes can be adjusted by adjusting the height relative to turf surface, thereby achieving proper brushing combination for various turf conditions. The effective grooming of the grass to orient in vertical direction optimizes the amount of clippings that are collected from cutting, which ultimately reduces mowing time. Further, the top-dress mode is mainly used for aggressive brushing situations such as working in top dressing (sand) into aeration holes or breaking up worm castings and aerification cores. With adjustable and constant down-force from biasing mechanism, operators can set the desired brushing aggressiveness which in turn will affect how many passes it will take to work or break up the material into the turf surface.

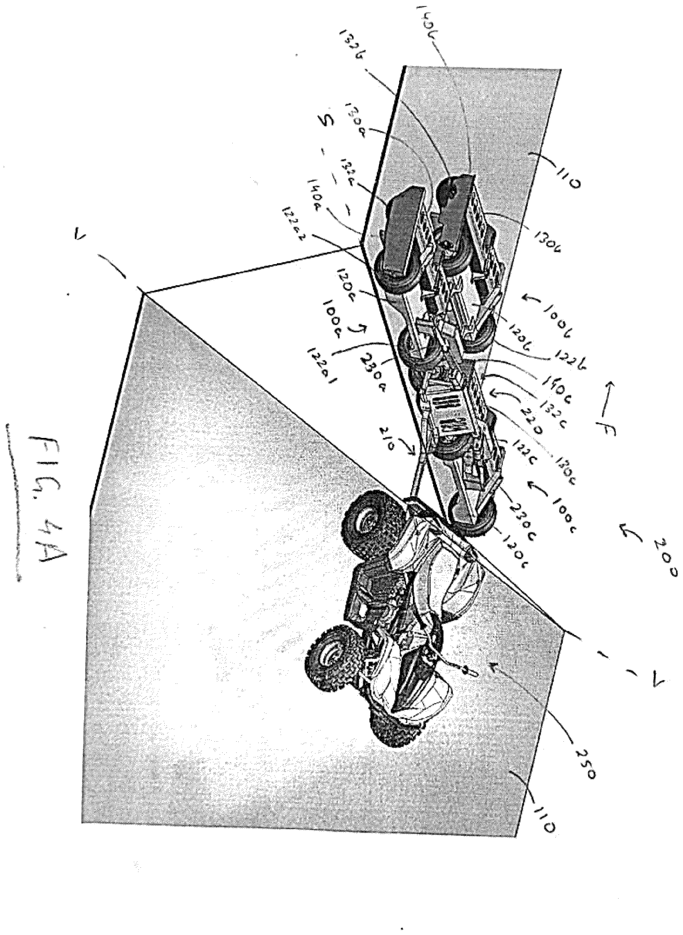

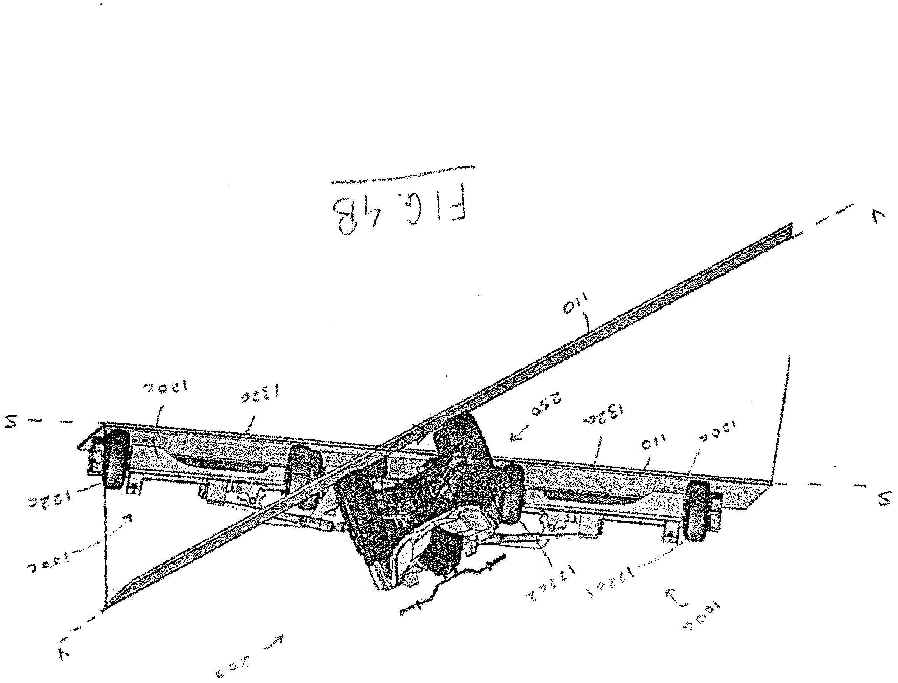

The present disclosure is further directed to a system operable for grooming grass on the turf surface 110. FIG. 4A illustrates a perspective view of the system 200 operable for grooming grass on the turf surface 110. The system 200 may be connected to a towing vehicle 250. FIG. 4B illustrates a front view of the system 200 being towed by a towing vehicle 250. The towing vehicle 250 may refer to any motorized vehicle configured to apply a pulling force on the system 200. The system 200 may include a hitch mechanism 210 for connecting the system 200 to the towing vehicle 250. In non-limiting examples, the towing vehicle 250 may include a standard utility vehicle, a light duty tractor, or any other vehicle with 12-volt power source and adequate towing capacity.

The system 200 may further include a central frame 220 pivotally coupled to the hitch mechanism 210. The hitch mechanism 210 may comprise a universal joint for connecting to the central frame 220. The system 200 may further include a plurality of turf grooming apparatus each coupled to the central frame 220. The plurality of turf grooming apparatus comprise at least one right side outboard apparatus 100a, a central apparatus 100b, and at least one left side outboard apparatus 100c. The details provided above for the apparatus 100 is applicable for each of the plurality of apparatus 100a-100c. It is to be understood herein that although the system 200 is described as having the plurality of apparatus 100a-100c, the system 200 may include additional apparatus as well without departing from the scope of the disclosure.

In particular, each of the plurality of apparatus 100a-100c may include corresponding wheel frames 120a-120c and corresponding at least one guide wheels 122a-122c. Further, each of the plurality of apparatus 100a-100c may include corresponding brush frames 130a-130c and corresponding at least one brush 132a-132c. Further, each of the plurality of apparatus 100a-100c may include corresponding chain frames 140a-140c and corresponding chain mechanisms (not visible), corresponding pivot mechanisms, and corresponding biasing mechanisms, and the details described above are not repeated for sake of brevity.

In an embodiment, the central apparatus 100b may be coupled to the central frame 220. In an embodiment, the central apparatus 100b and the central frame 220 may form one unit, i.e., a common unit. The central apparatus 100b may be positioned behind the central frame 220 in a direction of travel of the system 200. The central apparatus 100b may be configured to rotate together with the central frame 220 at least during the operation of the system 200 for grooming grass on the turf surface 110. That is, the towing vehicle 250 may tow the system 200 coupled thereto via the hitch mechanism 210, and when the system 200 is driven on the turf surface 110, the central apparatus 100b together with the central frame 220 may rotate with respect to, for example, the towing vehicle 250 by virtue of the hitch mechanism 210.

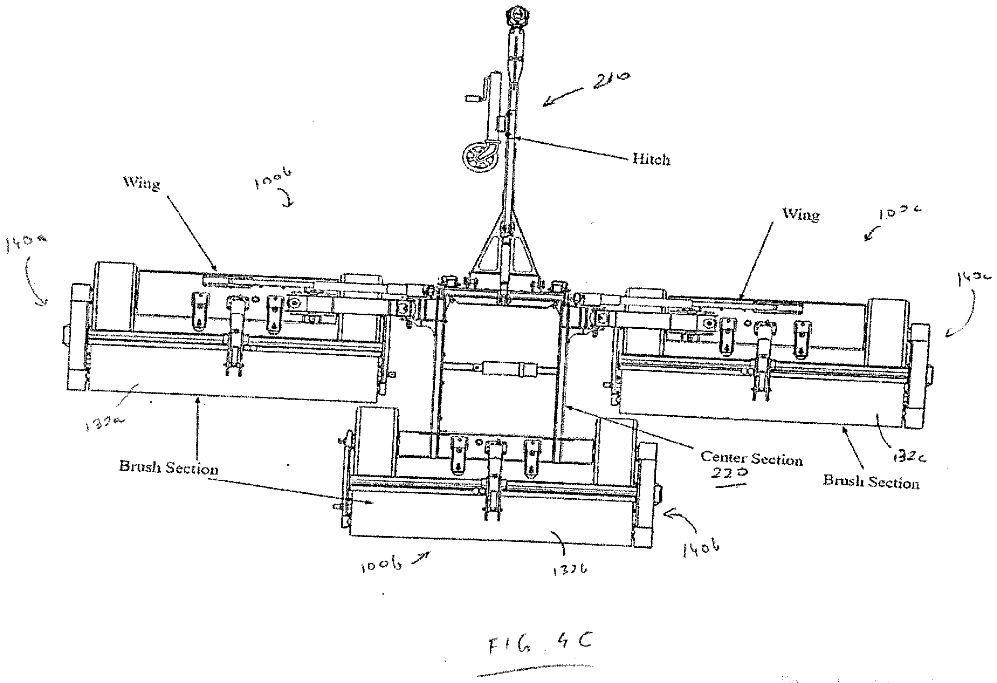

FIG. 4C illustrates a top view of the system 200 configured to be coupled to the towing vehicle 250 (not shown) via the hitch mechanism 210. As mentioned above, the hitch mechanism 210 may be a universal joint enabling rotation of the central apparatus 100b together with the central frame 220 about multiple rotational axes with respect to the towing vehicle. The hitch mechanism 210 facilitates the system to act as a pull type machine that is towed by the towing vehicle. The pull-type capability with multiple rotational axes is advantageous for such a ground driven system as compared to a 3-point connection, thereby enabling effective grooming of grass even in cases where contour of the turf surface varies as the system 200 is being driven thereon.

The rotation may be performed to compensate for change in contour of the turf surface 110 as the central apparatus 100b is driven thereupon. In an embodiment, the rotation may be a side to side rotation about multiple axes in the hitch mechanism 210. The central apparatus 100b may thus rotate freely side to side and/or pivot up and down via multiple axes in the hitch mechanism 210, in addition to the fore-aft pivoting described above, during the operation of the system 200 to groom the turf surface 110.

In an embodiment, the central apparatus 100b is configured to freely rotate side to side via multiple pivot axes in the hitch mechanism 210 to allow the center wheel frame 120b to be fixed to or be a member of the central frame 220. This allows for a fixed hitch design with may require only two common wheels for the central components, i.e., the central apparatus 100b and the central frame 220.

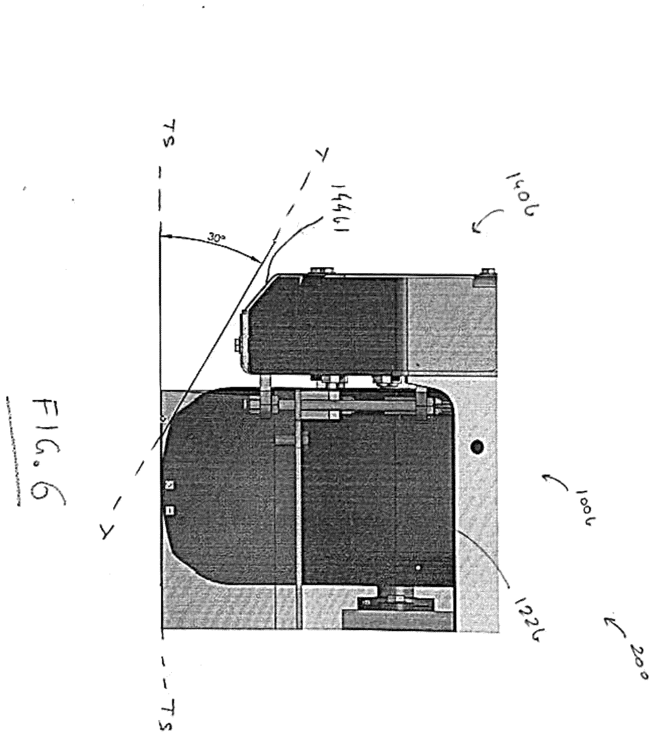

In an embodiment, to facilitate the side to side rotation, the chain frame 140b of the central apparatus 100b may have tapered ends. FIG. 6 illustrates an embodiment of the chain frame 140b of the central apparatus 100b. As depicted, at least some portion of the bottom end 140b1 of the chain frame 140b may be tapered. In an embodiment, a plane T-T passing through the tapered bottom end may form an angle with a plane parallel to the turf surface TS-TS. In an embodiment, the angle may be 30 degrees. The tapered bottom end improves clearance on side to side movements.

Further, each one of the right side and left side outboard apparatus 100a, 100c is pivotally coupled to the central frame 220 by means of a respective connection arm 230a and 230c. The respective connection arms 230a, 230c allow the right side and left side outboard apparatus 100a, 100c to pivot with respect to the central frame 220. The pivoting may be required in order to compensate for change in contour of the turf surface 110 when the system 200 is driven on the turf surface 110.

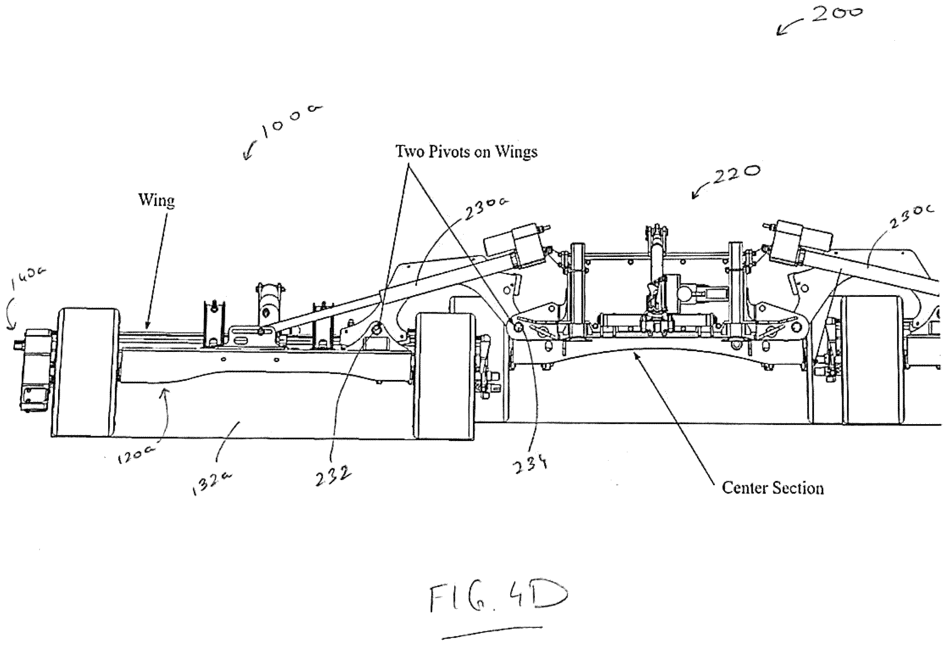

In an embodiment, each connection arm 230a, 230c comprise at least two pivot points allowing the corresponding right and left side outboard apparatus 100a, 100c to independently pivot as well as independently translate vertically. In addition, each of the right side and left side outboard apparatus 100a, 100c may be configured to pivot independently of the central apparatus 100b. Referring to FIG. 4D, a front view of the system 200 is illustrated in which the right side outboard apparatus 100a and the central frame 220 is majorly depicted. As described above, the right side outboard apparatus 100a is connected to the central frame 220 via the telescopic arm 230a. The telescopic arm 230a includes a first pivot point 232 and a second pivot point 234. The right side outboard apparatus 100a may pivot about any of the first pivot point 232 or the second pivot point 234. The right side outboard apparatus 100a can thus independently pivot as well as independently translate vertically. Similarly, the left side outboard apparatus 100c may also include corresponding pivot points that enable the left side outboard apparatus 100c to independently pivot as well as independently translate vertically.

Accordingly, an additional flexibility is achieved in the system 200 to effectively track the turf surface 110 when the system 200 is being towed thereupon. Further, constant wheel contact with the ground for each independent guide wheel is ensured, which is needed to drive the corresponding brush. Moreover, wheel skidding can be avoided to prevent harming the turf surface.

In use, the turf surface 110 may include uneven surfaces, such as hills, valleys, and other undulations. While the system 200 is being towed on the turf surface 110, the system 200 may encounter change in contour of the turf surface 110. For instance, the right side outboard apparatus 100a may be towed over a hill while the left side outboard apparatus 100c may be towed over a valley. Moreover, the central apparatus 100b may also travel over undulations on the turf surface 110. The pivoting of each of the plurality of apparatus 100a-100c is thus essential to ensure that the grooming of the grass is effectively carried out irrespective of change in contour of the turf surface 110. For instance, the pivoting ensures that the corresponding at least one brush 132a-132c does not lose contact with the grass in response to the change in contour of the turf surface 110. Moreover, as the pivoting of the plurality of apparatus 100a-100c is independent of each other, the system 200 can be towed on various turf conditions

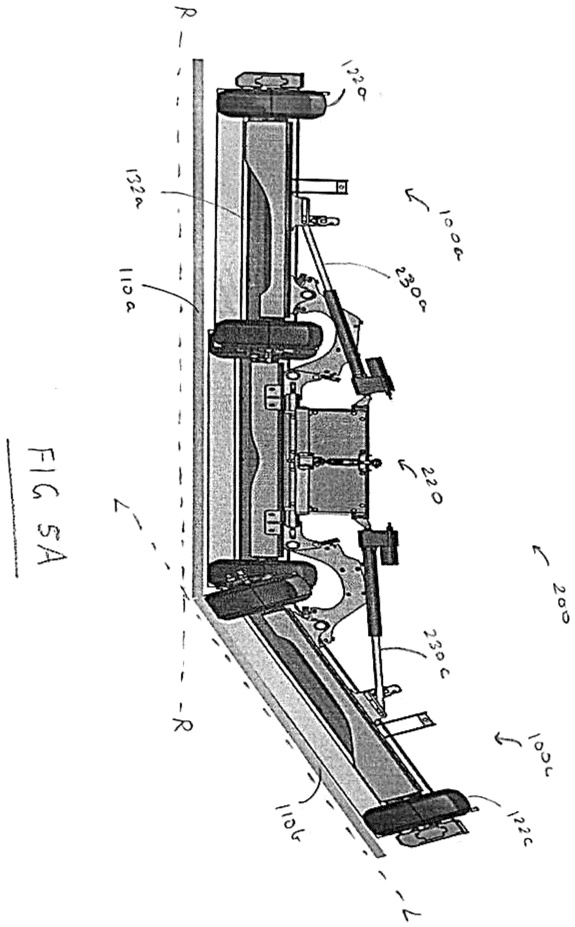

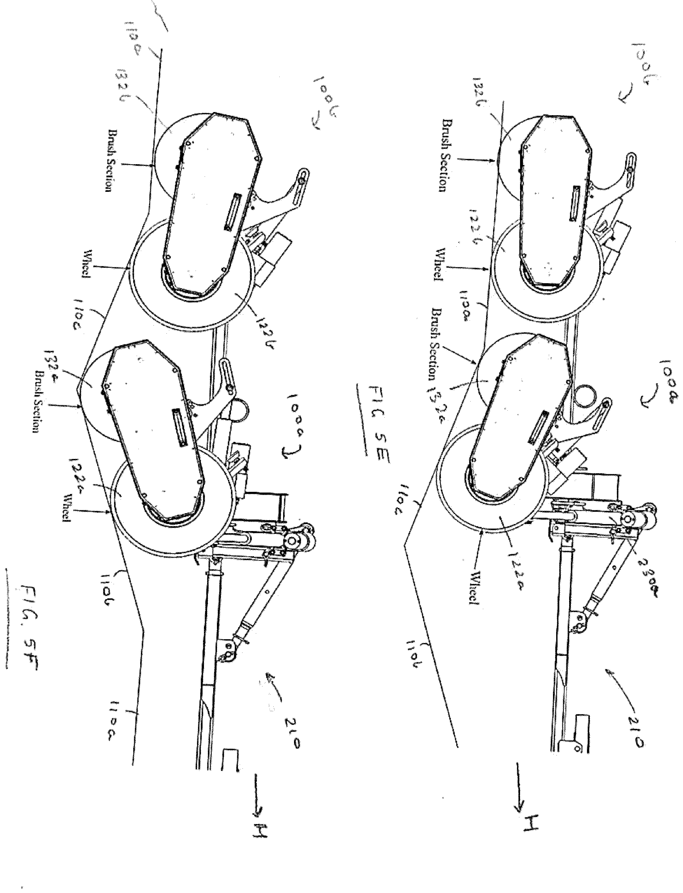

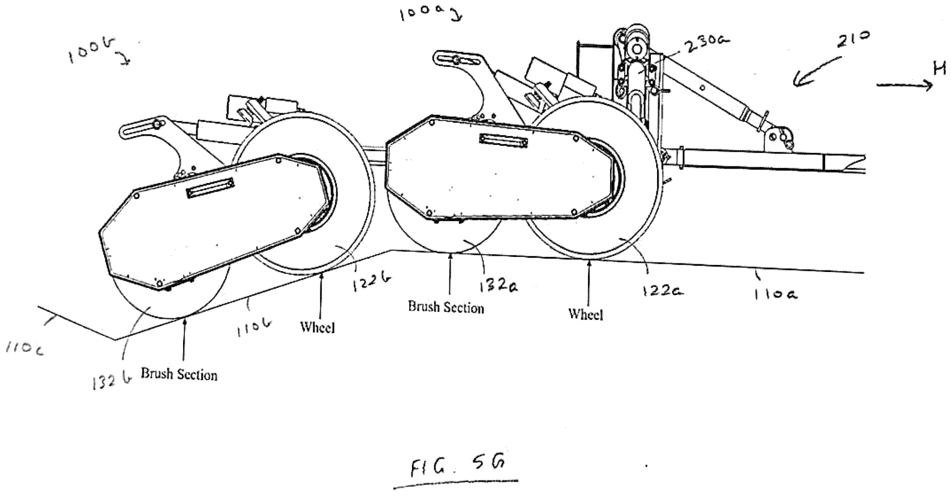

FIGS. 5A-5G illustrate various configurations of the system 200 in response to change in contour of the turf surface 110. In FIG. 5A, the turf surface 110 comprises a level surface 110a and a hill surface 110b at the left side of the level surface 110a. When the system 200 is towed by the towing vehicle (not shown), the left side outboard apparatus 100c is driven on the hill surface 110b while the central frame 220 and the right side outboard apparatus 100a are driven on the level surface 110a. Due to the connection arm 230c, the left side outboard apparatus 100c pivots with respect to the central frame 220, as depicted, when the left side outboard apparatus 100c is towed over the hill surface 110b. In an embodiment, the connection arm 230c is a telescopic arm. As depicted, the left side outboard apparatus 100c is towed on a plane L-L while the right side outboard apparatus 100a is towed on a plane R-R that is angled with respect to the plane L-L. This allows the left side outboard apparatus 100c to track the hill surface 110b and remain in contact with the grass on the hill surface 110b while the right side outboard apparatus 100a is towed over the level surface 110a (without requiring pivoting or vertical translation). Moreover, the pivoting of the left side outboard apparatus 100c is independent of any movement of the central apparatus 100b as well.

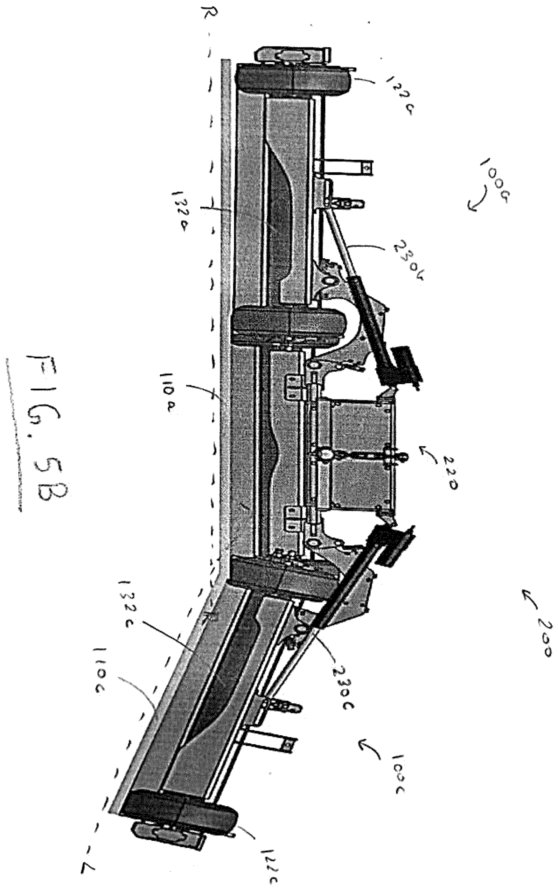

Similarly, in FIG. 5B, the turf surface 110 comprises the level surface 110a and a valley surface 110c at the left side of the level surface 110a. When the system 200 is towed by the towing vehicle (not shown), the left side outboard apparatus 100c is driven on the valley surface 110c while the central frame 220 and the right side outboard apparatus 100a are driven on the level surface 110a. Due to the connection arm 230c, the left side outboard apparatus 100c pivots with respect to the central frame 220, as depicted, when the left side outboard apparatus 100c is towed over the valley surface 110c. In FIG. 5B, the pivoting of the left side outboard apparatus 100c is in an opposite direction as compared to the pivoting of the left side outboard apparatus 100c in FIG. 5A. Accordingly, the left side outboard apparatus 100c tracks the valley surface 110c and remain in contact with the grass on the hill surface 110b, thereby optimizing grooming of the turf surface.

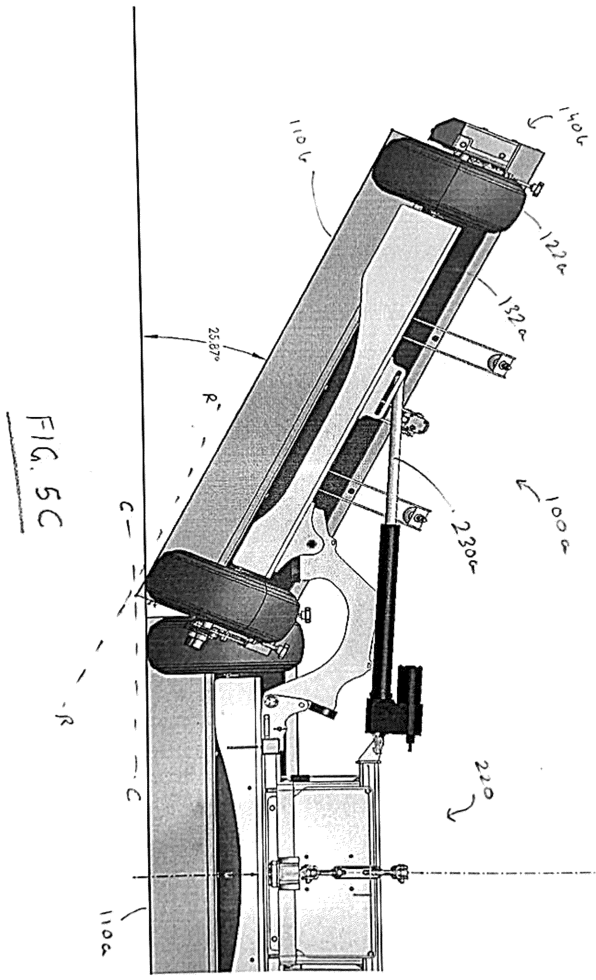

FIG. 5C depicts the pivoting of the right side outboard apparatus 100a with respect to the central frame 220. The right side outboard apparatus 100a may pivot by means of the connection arm 230a, which may be a telescopic arm. The turf surface 110 comprises the level surface 110a and the hill surface 110b at the right side of the level surface 110a. When the system 200 is towed by the towing vehicle (not shown), the right side outboard apparatus 100a is driven on the hill surface 110b. The right side outboard apparatus 100c then pivots with respect to the central frame 220, as depicted, by means of the connection arm 230a. As depicted, the right side outboard apparatus 100a is towed on the plane R-R while the central frame is towed on a plane C-C that is angled with respect to the plane R-R. This allows the right side outboard apparatus 100a to track the hill surface 110b and remain in contact with the grass on the hill surface 110b during operation of the system 200 to groom the turf surface 110.

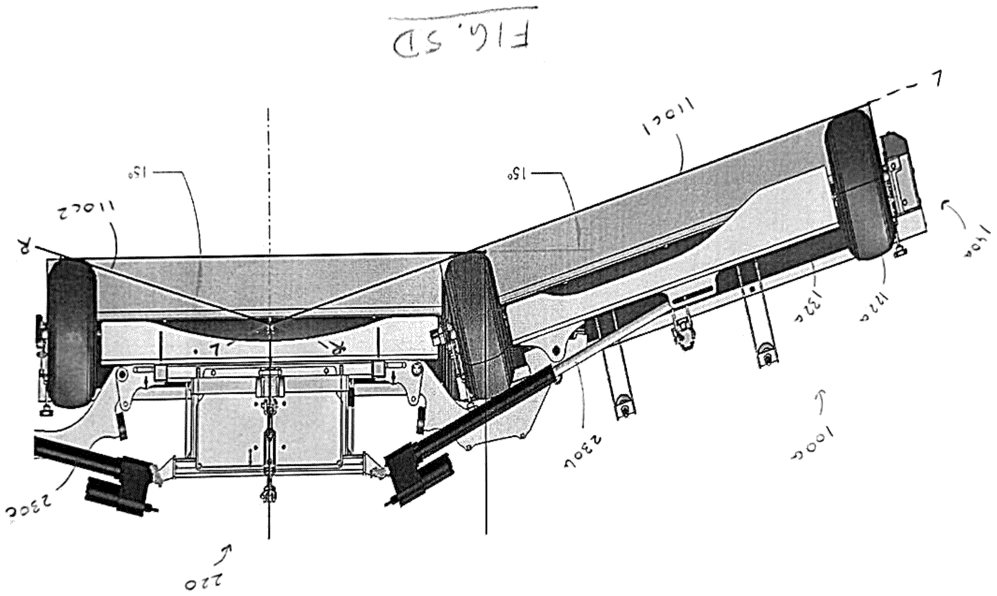

FIG. 5D depicts the independent pivoting of the right side outboard apparatus 100a and the left side outboard apparatus 100c. In FIG. 5D, the turf surface comprises a right valley surface 110c1 and a left valley surface 110c2. The right side outboard apparatus 100a is towed on the plane R-R while the left side outboard apparatus 100c is towed on the plane L-L angled with respect to the plane R-R. Both the right side outboard apparatus 100a and the left side outboard apparatus 100c pivot independently with respect to the central frame 220 such that the right side outboard apparatus 100a remains in contact with the grass on the right valley surface 110c1 and the left side outboard apparatus 100c remains in contact with the grass on the left valley surface 110c2.As a result, grooming of grass on the turf surface with contour changes in facilitated in a single towed motion of the system 200 since each outboard apparatus 100a, 100c independently pivots on an angle during operation as well as independently translate vertically.

In FIGS. 5E-5G, a side view of the system 200 being towed by a towing vehicle is depicted. The system 200 is coupled to the system via the hitch mechanism 210, enabling the system 200 (at least the central apparatus 100b) to rotate about multiple rotational axes provided by the hitch mechanism 210. Further, each of the apparatus 100a-100c are configured for fore-aft pivoting by virtue of the respective pivot mechanisms, as described above at least with reference to FIGS. 3A-3C. Furthermore, the right side outboard apparatus 100a and the left side outboard apparatus 100c (not visible) are configured to pivot by virtue of the corresponding connection arms.

The turf surface 110 may include level surface 110a, hill surface 110b, and valley surface 110c as the system 200 is being towed on the turf surface 110. FIGS. 5E-5G can be understood as a sequence of the system 200 being towed on the turf surface 110 in the direction H. In FIG. 5E, the right side outboard apparatus 100a is tracking the valley surface 110c while the central apparatus 100b is tracking the level surface 110a. By virtue of the corresponding pivoting mechanism enabling fore-aft pivoting of the right side outboard apparatus 100a, the corresponding brush 132a does not loose contact with grass on the turf surface 110. As mentioned above, the pivoting may occur at the axle of the corresponding guide wheel 122a.

As the system 200 is being towed further in the direction H, the right side outboard apparatus 100a now tracks the hill surface 110b while the central apparatus 100b is partly on the valley surface 110c. Regarding the right side outboard apparatus 100a, the corresponding brush 132a still remains in contact with grass on the turf surface 110 as the right side outboard apparatus 100a travels from the valley surface 110c to the hill surface 110b. This is due to the fore-aft pivoting of the right side outboard apparatus 100a. Regarding the central apparatus 100b, the corresponding guide wheel 122b moves on the valley surface 110c however the corresponding brush 132b is tracking the level surface 110a. The corresponding brush 132b remains in contact with grass on the level surface 110a even though the corresponding guide wheel 122b is moving on a different plane (valley surface 110c) as compared to the corresponding brush 132b. This is achieved due to one or more of the fore-aft pivoting of the central apparatus 110b and the pivoting about the rotation axes of the hitch mechanism 210.

As the system 200 is being towed further in the direction H, the right side outboard apparatus 100a now tracks the level surface 110b while the central apparatus 100a is on the hill surface 110c. Regarding the right side outboard apparatus 100a, the corresponding brush 132a remains in contact with grass on the level surface 110a after moving from the hill surface 110b to the level surface 110a. The central apparatus 100b tracks the hill surface 110b, in that, the corresponding guide wheel 122b remains in contact with grass on the hill surface 110b. As a result, even with varying contouring of the turf surface, the fore-aft pivoting of the apparatus 100a-100c enables effective grooming of the grass on the turf surface 110. Moreover, with the side-to side rotation as described above, and the pivoting of the right and left side outboard apparatus due to connection arms 230a, 230c, the system 100 can be towed over various configurations (contour variations) of turf surfaces while achieving effective grooming of the grass on the turf surface.

In an embodiment, referring again to FIGS. 4A-4B, at least one of the right side outboard apparatus 100a and the left side outboard apparatus 100c partially overlaps the central apparatus 100b when viewed in a direction H extending from the central frame 220 towards the central apparatus 100b. As a result, a continuous width of grooming can be achieved when the system 200 is towed on the turf surface 110. In an embodiment, the corresponding at least one guide wheels 122a-122c may be positioned inboard of each of the corresponding at least one brush 132a-132c in order to ensure that the grass is groomed by the corresponding at least one brush 132a-132c after the at least one guide wheels 122a-122c travel over the grass.

As described above, the system 200 may be pivotally coupled to the towing vehicle 250 via the hitch mechanism 210. The hitch mechanism 210 may allow the system 200 to be towed on a different plane that a plane on which the towing vehicle 250 is being driven. For instance, as seen in FIGS. 4A-4B, the towing vehicle 250 may be driven on plane V-V while the system 200 may be towed on a plane S-S in the direction of travel of the towing vehicle 250. The hitch mechanism 210 this facilitates the system 200 to be towed on turf surfaces with varying contours while achieving effective grooming of the grass on the turf surfaces in spite of the varying contours.

In an embodiment, at least one of the right and left side outboard apparatus 100a, 100c may comprise an inboard wheel and an outboard wheel. For instance, the right side outboard apparatus 100a may comprise the inboard wheel 122a1 and the outboard wheel 122a2. As depicted, the outboard wheel 122a2 is positioned further from the central frame 220 than the inboard wheel 122a1 during the deployed state.

In an embodiment, the system 200 may comprise an actuator operatively coupled to at least one of the right and left side outboard apparatus 100a, 100c. In an embodiment, the actuator may be an electric actuator. In another embodiment, the actuator may be a hydraulic cylinder. The actuator may be configured to vertically fold at least one of the right and left side outboard apparatus 100a, 100c with respect to the central frame 220.

In an embodiment, system 200 may be shifted between a deployed state and a storage state thereof. In the deployed state, at least one of the right side and left side outboard apparatus 100a, 100c extends at least partially beyond the width of the central apparatus 100b, thereby providing the system 200 with a winged configuration wherein the right side and left side outboard apparatus may resembled wings of the central frame 220. This enables the system 200 to be towed by the towing vehicle 250 for grooming the turf surface 110. The deployed state of the system 200 is depicted at least in FIGS. 4A-4B. In the storage state, at least one of the right side and left side outboard apparatus 100a, 100c is positioned within a width of the central apparatus 100b. This enables easy storage, transport, and shipping of the system 200. In an embodiment, in the storage state, the right and left side outboard apparatus may remain in a rigid state for stable transportation.

To fold at least one of the right side and left side outboard apparatus 100a, 100c from the deployed state to the storage state, the actuators may pull the wing(s) (at least one of the right side and left side outboard apparatus 100a, 100c) with a pulling force. In an embodiment, the actuators enables the wing(s) to pull directly on the wing wheel frame (for instance, 120a and/or 120c), rather than the connection arm (for instance, 230a and/or 230c). This configuration permits the wing(s) to be pulled vertical and made mechanically rigid in transport, which provides better stability for safety and a more compact unit for storage.

During folding of the right side outboard apparatus 100a from the deployed state to the storage state, the inboard wheel 122a1 may rise off the turf surface 110 prior to the outboard wheel 122a2. Further, during folding of the right side outboard apparatus 100a from the storage state to the deployed state, the outboard wheel 122a2 may contact the turf surface 110 prior to the inboard wheel 122a1. The kinematics with the corresponding center of gravity of the right side outboard apparatus 100a allows for the inboard wheel 122a1 to be lifted off of the turf surface first, followed by the outboard wheel 122a2. In an embodiment, with stoppers, the right side outboard apparatus 100a can still be folded vertically. When shifting the right side outboard apparatus 100a from the storage state to the deployed state, the outboard wheel 122a2 touches the turf surface first, followed by the inboard wheel 122a1, optionally with assistance from a compression stopper to facilitate the sequence.

As a result, damage to the turf surface during shifting of the system between the deployed and storage states is prevented. This is critical to avoid having the inboard wheel 122a1 being dragged along the turf surface 110 causing potential damage. In an embodiment, the left side outboard apparatus 100c may also include inboard and outboard wheels, and the details provided above with respect to the right side outboard apparatus 100a would apply to the left side outboard apparatus 100c as well.

Accordingly, a turf grooming apparatus and associated system is described. The turf grooming apparatus is provisioned with rotary brush, and optionally drag brush, to contour turf surfaces with variable contour. Rotational fore-aft degree of freedom is provided for better contouring ability by means of a pivot mechanism. The pivoting may occur at the axle of the guide wheel, allowing for a chain configuration that remains in constant tension for any fore/aft rotation. The rotary brush and/or the drag brush may be floating brushes that can be adjusted with a spring force down pressure from a biasing mechanism, as opposed to adjusting the relative distance to the ground surface with guide wheels. Further, the aggressiveness of the brushes can be adjusted by adjusting the height relative to turf surface, thereby achieving proper brushing combination for various turf conditions. In addition, multiple apparatus form a system that can be towed by a towing vehicle. The system can be used to groom turf surfaces of varying contour as each apparatus forming the system is independently pivotable to compensate for change in contour and remaining in contact with the grass at all pivoted positions.

The apparatus of the system may include an apparatus as per any examples/embodiments of the apparatus described in the present disclosure.

Since many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalents.
*There now follows a series of clauses, not claims, setting out aspects of the invention:*
1. An apparatus for grooming grass on a turf surface, the apparatus comprising:
   at least one guide wheel for driving the apparatus on the turf surface;
   at least one brush operationally coupled to the at least one guide wheel and configured to contact and groom the grass when the apparatus is driven on the turf surface; and
   a pivot mechanism configured to pivot the at least one brush about an axle of the at least one guide wheel to compensate for change in contour of the turf surface.
2. The apparatus of clause 1, wherein the pivot mechanism is configured to pivot the at least one brush in response to change in contour of the turf surface while the apparatus is being driven thereupon, wherein said pivoting of the at least one brush ensures that the at least one brush remains in contact with the grass during said change in contour of the turf surface.
3. The apparatus of clause 1 or 2, wherein the pivot mechanism provides the at least one brush with a fore aft degree of freedom.
4. The apparatus of any preceding clause, further comprising a biasing mechanism configured to bias the at least one brush with a biasing force for selectively adjusting a relative distance of the at least one brush with the turf surface, thereby adjusting the pressure applied on the grass by the at least one brush, wherein the biasing mechanism comprises a spring and the biasing force is a downforce acting at least partially in a vertical direction that causes the at least one brush to operate as a floating brush.
5. The apparatus of any preceding clause, wherein the at least one brush comprises at least one rotary brush configured to orient the grass in a vertical direction, and the apparatus further comprises a chain mechanism configured to rotate the rotary brush in conjunction with the at least one guide wheel, wherein the chain mechanism remains in a constant tension during the pivoting of the at least one brush about the axle of the at least one guide wheel.
6. An apparatus for grooming grass on a turf surface, the apparatus comprising:
   at least one guide wheel for driving the apparatus on the turf surface;
   at least one floating brush operationally coupled to the guide wheel and configured to contact and groom the grass when the apparatus is driven on the turf surface; and
   a biasing mechanism configured to bias the at least one floating brush with a biasing force for selectively adjusting a relative distance of the at least one floating brush with the turf surface, thereby adjusting the pressure applied on the grass by the at least one floating brush.
7. The apparatus of clause 6, wherein the biasing mechanism comprises a spring, and the biasing force is a downforce acting at least partially in a vertical direction.
8. The apparatus of clause 6 or 7, wherein the at least one floating brush comprises at least one rotary brush configured to orient the grass in a vertical direction, and the apparatus further comprises a chain mechanism configured to rotate the rotary brush in conjunction with the at least one guide wheel, wherein the chain mechanism remains in a constant tension during the operation of the apparatus.
9. The apparatus of any of clauses 6 to 8, further comprising a pivot mechanism configured to pivot the at least one brush about an axle of the at least one guide wheel to compensate for change in contour of the turf surface, wherein the pivot mechanism is configured to pivot the at least one brush in response to change in contour of the turf surface while the apparatus is being driven thereupon.
10. A system operable for grooming grass on a turf surface, the system, at least during operation thereof, comprising:
   a central frame; and
   a plurality of turf grooming apparatus each coupled to the central frame, said plurality of turf grooming apparatus comprising a central turf grooming apparatus, at least one right side outboard turf grooming apparatus, and at least one left side outboard turf grooming apparatus, said central turf grooming apparatus being configured to rotate together with the central frame at least during operation of the system for grooming grass on the turf surface.
11. The system of clause 10, wherein at least one of the plurality of turf grooming apparatus comprises:
   at least one guide wheel for driving the apparatus on the turf surface;
   at least one brush operationally coupled to the at least one guide wheel and configured to contact and groom the grass when the apparatus is driven on the turf surface; and
   a pivot mechanism configured to pivot the at least one brush about an axle of the at least one guide wheel to compensate for change in contour of the turf surface.
12. The system of clause 11, wherein said at least one of the plurality of turf grooming apparatus comprises a chain mechanism configured to rotate the at least one brush in conjunction with the at least one guide wheel, wherein the chain mechanism remains in constant tension during the pivoting of the at least one brush about the axle of the at least one guide wheel.
13. The system of clause 11 or 12, wherein the pivot mechanism is configured to pivot the at least one brush in response to change in contour of the turf surface while the apparatus is being driven thereupon, wherein said pivoting of the at least one brush ensures that the at least one brush remains in contact with the grass during said change in contour of the turf surface, wherein the pivot mechanism provides the at least one brush with a fore aft degree of freedom.
14. The system of any of clauses 11 to 13, wherein the at least one of the plurality of turf grooming apparatus comprises a biasing mechanism configured to bias the at least one brush with a biasing force for selectively adjusting a relative distance of the at least one brush with the turf surface, thereby adjusting the pressure applied on the grass by the at least one brush, wherein the biasing mechanism comprises a spring, and the biasing force is a downforce acting at least partially in a vertical direction that causes the at least one brush to operate as a floating brush.
15. The system of any of clauses 10 to 14, further comprising a hitch mechanism for connecting the system to a towing vehicle, said central frame being pivotally coupled to the hitch mechanism, wherein the central frame is configured to freely rotate side to side via multiple pivot axes in the hitch mechanism, wherein the central frame is configured to pivot up and down with respect to the hitch mechanism; and/or
   wherein at least one of the right side and left side outboard turf grooming apparatus partially overlaps the central turf grooming apparatus when viewed in a direction extending from the central frame towards the central turf grooming apparatus;
   and/or wherein each one of the right side and left side outboard turf grooming apparatus is pivotally coupled to the central frame by means of a respective connection arm, wherein each connection arm has at least two pivot points allowing the corresponding right and left side outboard turf grooming apparatus to independently pivot as well as independently translate vertically, wherein each of the right side and left side outboard turf grooming apparatus are configured to pivot independently of the central turf grooming apparatus;
   and/or further comprising an actuator operatively coupled to at least one of the right and left side outboard turf grooming apparatus and configured to fold the at least one outboard turf grooming apparatus with respect to the central frame between a storage state in which the at least one outboard turf grooming apparatus is positioned within a width of the central turf grooming apparatus and a deployed state in which the at least one outboard turf grooming apparatus extends at least partially beyond the width of the central turf grooming apparatus; and/or
   wherein the at least one outboard turf grooming apparatus comprises an inboard wheel and an outboard wheel, said outboard wheel being positioned further from the central frame than the inboard wheel during the deployed state, wherein during folding of the at least one outboard turf grooming apparatus from the deployed state to the storage state, the inboard wheel rises off the turf surface prior to the outboard wheel, and during folding of the at least one outboard turf grooming apparatus from the storage state to the deployed state, the outboard wheel contacts the turf surface prior to the inboard wheel; and/or
   wherein the actuator is configured to fold the at least one outboard turf grooming apparatus with respect to the central frame into a rigid state.

## Claims

1. An apparatus (100) for grooming grass on a turf surface, the apparatus (100) comprising:
a central frame (220); and
a plurality of turf grooming apparatus (100) each coupled to the central frame (220), said plurality of turf grooming apparatus (100) comprising a central turf grooming apparatus (100), at least one right side outboard turf grooming apparatus (100a), and at least one left side outboard turf grooming apparatus (100), said central turf grooming apparatus (100) being configured to rotate together with the central frame (220) at least during operation of the apparatus for grooming grass on the turf surface.

2. The apparatus (100) of claim 1 further comprising an at least one guide wheel (122) for driving the apparatus (100) on the turf surface.

3. The apparatus (100) of claim 1 or 2, further comprising an at least one brush (132a-132c) operationally coupled to the at least one guide wheel (122) and configured to contact and groom the grass when the apparatus (100) is driven on the turf surface.

4. The apparatus (100) of any of claims 1 - 3, further comprising a pivot mechanism (150) configured to pivot the at least one brush (132a-132c) about an axle (124) of the at least one guide wheel (122) to compensate for change in contour of the turf surface.

5. The apparatus (100) of claim 4, wherein the pivot mechanism (150) is configured to pivot the at least one brush (132a-132c) in response to change in contour of the turf surface while the apparatus (100) is being driven thereupon, wherein said pivoting of the at least one brush (132a-132c) ensures that the at least one brush (132a-132c) remains in contact with the grass during said change in contour of the turf surface.

6. The apparatus (100) of claim 4 or 5, wherein the pivot mechanism (150) provides the at least one brush (132a-132c) with a fore aft degree of freedom.

7. The apparatus (100) of any of claims 1 - 6, further comprising a biasing mechanism configured to bias the at least one brush (132a-132c) with a biasing force for selectively adjusting a relative distance of the at least one brush (132a-132c) with the turf surface, thereby adjusting the pressure applied on the grass by the at least one brush (132a-132c), wherein the biasing mechanism comprises a spring and the biasing force is a downforce acting at least partially in a vertical direction that causes the at least one brush (132a-132c) to operate as a floating brush.

8. The apparatus (100) of any of claims 3 - 7, wherein the at least one brush (132a-132c) comprises at least one rotary brush (133a) configured to orient the grass in a vertical direction, and the apparatus (100) further comprises a chain mechanism configured to rotate the rotary brush (133a) in conjunction with the at least one guide wheel (122), wherein the chain mechanism remains in a constant tension during the pivoting of the at least one brush (132a-132c) about the axle (124) of the at least one guide wheel (122).

9. The apparatus (100) of any of claims 3 - 8, wherein said at least one of the plurality of turf grooming apparatus (100) comprises a chain mechanism configured to rotate the at least one brush (132a-132c) in conjunction with the at least one guide wheel (122), wherein the chain mechanism remains in constant tension during the pivoting of the at least one brush (132a-132c) about the axle (124) of the at least one guide wheel (122).

10. The apparatus (100) of any of claims 4 - 9, wherein the pivot mechanism (150) is configured to pivot the at least one brush (132a-132c) in response to change in contour of the turf surface while the apparatus (100) is being driven thereupon, wherein said pivoting of the at least one brush (132a-132c) ensures that the at least one brush (132a-132c) remains in contact with the grass during said change in contour of the turf surface, wherein the pivot mechanism (150) provides the at least one brush (132a-132c) with a fore aft degree of freedom.

11. The apparatus (100) of any of claims 1 - 10, further comprising a hitch mechanism (210) for connecting the system to a towing vehicle, said central frame (220) being pivotally coupled to the hitch mechanism (210), wherein the central frame (220) is configured to freely rotate side to side via multiple pivot axes in the hitch mechanism (210), wherein the central frame (220) is configured to pivot up and down with respect to the hitch mechanism (210).

12. The apparatus (100) of any of claims 1 - 11, wherein at least one of the right side and left side outboard turf grooming apparatus (100) partially overlaps the central turf grooming apparatus (100) when viewed in a direction extending from the central frame (220) towards the central turf grooming apparatus (100).

13. The apparatus (100) of any of claims 1 - 12, wherein each one of the right side and left side outboard turf grooming apparatus (100) is pivotally coupled to the central frame (220) by means of a respective connection arm, wherein each connection arm has at least two pivot points allowing the corresponding right and left side outboard turf grooming apparatus (100) to independently pivot as well as independently translate vertically, wherein each of the right side and left side outboard turf grooming apparatus (100) are configured to pivot independently of the central turf grooming apparatus (100).

14. The apparatus (100) of any of claims 1 - 13, further comprising an actuator operatively coupled to at least one of the right and left side outboard turf grooming apparatus (100) and configured to fold the at least one outboard turf grooming apparatus (100) with respect to the central frame (220) between a storage state in which the at least one outboard turf grooming apparatus (100) is positioned within a width of the central turf grooming apparatus (100) and a deployed state in which the at least one outboard turf grooming apparatus (100) extends at least partially beyond the width of the central turf grooming apparatus (100); and optionally wherein the actuator is configured to fold the at least one outboard turf grooming apparatus (100) with respect to the central frame (220) into a rigid state.

15. The apparatus (100) of any of claims 1 - 14, wherein the at least one outboard turf grooming apparatus (100) comprises an inboard wheel (122a1) and an outboard wheel (122a2), said outboard wheel (122a2) being positioned further from the central frame (220) than the inboard wheel (122a1) during the deployed state, wherein during folding of the at least one outboard turf grooming apparatus (100) from the deployed state to the storage state, the inboard wheel (122a1) rises off the turf surface prior to the outboard wheel (122a2), and during folding of the at least one outboard turf grooming apparatus (100) from the storage state to the deployed state, the outboard wheel (122a2) contacts the turf surface prior to the inboard wheel (122a1); and optionally wherein the actuator is configured to fold the at least one outboard turf grooming apparatus (100) with respect to the central frame (220) into a rigid state.
